# EUROPEAN PATENT APPLICATION

(11) **EP 4 456 288 A1**
(43) Date of publication of application: **30.10.2024**
(21) Application number: 23767022.9
(22) Date of filing: 07.02.2023
(51) Int. Cl.: H01M 50/24, H01M 50/211, H01M 50/242, H01M 50/251, H01M 50/264, H01M 50/271, H01M 50/383, H01M 10/42, H01M 10/052

(54) **BATTERY PACK AND ENERGY STORAGE SYSTEM INCLUDING SAME**

(30) Priority: 11.03.2022 KR 20220030830
(71) Applicant: LG Energy Solution, Ltd., Seoul 07335 (KR)
(72) Inventor: YUN, Youngwon, Daejeon 34122 (KR); MOON, Jeong Oh, Daejeon 34122 (KR); LEE, Jaeki, Daejeon 34122 (KR); KIM, Kiyoun, Daejeon 34122 (KR); AHN, Jong Kyu, Daejeon 34122 (KR); KIM, Hyeon Kyu, Daejeon 34122 (KR); PARK, Gidong, Daejeon 34122 (KR); LEE, Seongju, Daejeon 34122 (KR)
(74) Representative: Plasseraud IP
(86) International application number: PCT/KR2023/001751
(87) International publication number: WO 2023/171917

(57) **Abstract**

A battery pack according to the present disclosure includes a pack case, a cell module provided inside the pack case and including a cell assembly having a plurality of battery cells, a firefighting tank disposed on an upper side of the cell assembly and holding a fire extinguishing agent in an internal space, and an end plate disposed on at least one of the front and rear sides of the cell assembly and configured to support the firefighting tank.

## Description

### [TECHNICAL FIELD]

### Cross Citation with Related Application(s)

This application claims the benefit of Korean Patent Application No. 10-2022-0030830 filed on March 11, 2022 with the Korean Intellectual Property Office, the entire contents of which are incorporated herein by reference.

The present disclosure relates to a battery pack and an energy storage system including the same, and more particularly, to a battery pack configured to ensure safety even when a thermal event occurs, and an energy storage system including the same.

### [BACKGROUND]

As the demands for portable electronic products such as notebooks, video cameras and cellular phones are rapidly increased in these days, and development of electric vehicles, energy storage batteries, robots, satellites, etc. is under active progress, numerous studies are being made on high-performance secondary batteries capable of being repeatedly charged and discharged.

Currently, nickel-cadmium batteries, nickel-hydrogen batteries, nickel-zinc batteries, lithium secondary batteries or the like are commercially available as secondary batteries. Among them, lithium secondary batteries have come into the spotlight because they have advantages, for example, hardly exhibiting memory effects in comparison with nickel-based secondary batteries and thus being freely charged and discharged, and having very low self-discharge rate and high energy density.

The lithium secondary battery mainly uses lithium oxide and carbonaceous material as a cathode active material and an anode active material, respectively. The lithium secondary battery includes an electrode assembly in which a cathode plate and an anode plate respectively coated with the cathode active material and the anode active material are disposed with a separator interposed between them, and an exterior material which seals and receives the electrode assembly together with an electrolyte solution.

Meanwhile, depending on the shape of the battery case, a lithium secondary battery may be classified into a can-type secondary battery where the electrode assembly is mounted in a metal can, and a pouch-type battery where the electrode assembly is mounted in a pouch of an aluminum laminate. In addition, depending on the shape of the metal can, the can-type secondary battery may be further classified into a cylindrical battery and a prismatic battery.

Here, the pouch of the pouch-type secondary battery can be largely divided into a lower sheet and an upper sheet covering it. At this time, an electrode assembly formed by stacking and winding a cathode, an anode and a separator is housed in the pouch. Then, after housing the electrode assembly, the edges of the upper sheet and the lower sheet are sealed by heat sealing or the like. In addition, the electrode tab drawn out from each electrode may be coupled to the electrode lead, and an insulating film may be added to a portion wherein the electrode lead comes into contact with the sealing part.

Thus, the pouch-type secondary battery can have the flexibility to be configured in various forms. In addition, the pouch-type secondary battery has the advantage that a secondary battery having the same capacity can be realized with a smaller volume and mass.

Application fields of such lithium secondary batteries tend to gradually extend to Energy Storage System (ESS) and the like. The lithium secondary battery is made into a dense structure in which a plurality of battery cells are overlapped or stacked by themselves or in a state of being mounted in a cartridge or the like so as to provide high voltage and high current, and then is used as a cell module or a battery pack in which they are electrically connected. As an example, the energy storage system may also be composed of an assembly of home battery packs used in various types of houses (e.g., a detached house, an apartment, etc.).

In such a battery pack configuration, one of the typically important issues is safety. In particular, when a thermal event occurs in one battery cell among a plurality of battery cells included in the battery pack, such an event need to be suppressed from propagating to other battery cells. If thermal propagation between battery cells is not properly suppressed, this causes a thermal event in several battery cells included in the battery pack, which may cause bigger problems such as ignition or explosion of the battery pack. Moreover, the ignition or explosion that occurs in the battery pack may cause great damage to human life or loss of property in the periphery. In particular, in the case of a home battery pack, if ignition or explosion occurs, it may harm the safety of people living in the house, and may spread into a house fire to cause more damage. Therefore, in the case of such a battery pack, a configuration capable of appropriately controlling the above-mentioned thermal event is required.

In particular, in the case of such a battery pack, it is desired to ensure that the configuration for controlling the above thermal event can be safely fixed within the battery pack, thereby more stably controlling the thermal event.

### [DETAILED DESCRIPTION OF THE INVENTION]

### [Technical Problem]

The present disclosure has been designed to solve the above problems, and an object thereof is to provide a battery pack having an improved structure so as to properly control a thermal event which occurs inside the battery pack, and an energy storage system including the same.

However, the objects and advantages of the present disclosure are not limited to those described above, and other objects and advantages not mentioned above will be clearly understood by those skilled in the art from the following description.

### [Technical Solution]

In order to achieve the above object, according to an embodiment of the present disclosure, there is provided a battery pack comprising: a pack case, a cell module provided inside the pack case and including a cell assembly having a plurality of battery cells, a firefighting tank disposed on an upper side of the cell assembly and holding a fire extinguishing agent in an internal space, and an end plate disposed on at least one of the front and rear sides of the cell assembly and configured to support the firefighting tank.

Preferably, the end plates may be disposed on both sides at the front and rear of the cell assembly, and may be configured to press at least one of front and rear surfaces of the cell assembly when swelling of the battery cell occurs.

Preferably, the firefighting tank may be configured to discharge the fire extinguishing agent between both sides of the bottom part toward the cell assembly when heat is applied from the cell assembly, and the end plates may support both sides of the bottom part of the firefighting tank in a vertical direction.

Preferably, a fixing part having a predetermined area and making surface contact with both sides of the bottom part of the firefighting tank may be provided on the upper side of the end plate.

Preferably, the fixing part may be bent from an upper end of the end plate and formed to extend to a predetermined length along an outside direction of the cell assembly.

Preferably, the end plate may include a first plate disposed on the front surface of the cell assembly and supporting the front side of the firefighting tank in a vertical direction, and a second plate disposed on the rear surface of the cell assembly and supporting the rear side of the firefighting tank in the vertical direction.

Preferably, the fixing part may include a first fixing part that is formed to extend from the upper end of the first plate in the front/rear direction of the cell assembly, and is coupled to the front side of the firefighting tank in the vertical direction.

Preferably, the first fixing part may make surface contact with the front side of the firefighting tank.

Preferably, the fixing part may further include a second fixing part that is formed to extend from the upper end of the second plate in the front/rear direction of the cell assembly, and is coupled to the rear side of the firefighting tank in the vertical direction.

Preferably, the second fixing part may make surface contact with the rear side of the firefighting tank.

Preferably, the pack case may include a guide protrusion that is formed to protrude from the bottom part of the pack case in a vertical direction, and is provided apart from the front surface and the rear surface of the cell assembly at a specified interval in the front/rear direction of the cell assembly.

Preferably, the guide protrusion may be disposed on the opposite side of the cell assembly with the end plate interposed therebetween.

Preferably, the guide protrusion may include a first protrusion formed apart from the front surface of the cell assembly at a specified interval in the front/rear direction of the cell assembly, and a second protrusion formed apart from the rear surface of the cell assembly at a specified interval in the front/rear direction of the cell assembly.

Preferably, the first plate may be disposed between the first protrusion and the front surface of the cell assembly in the front/rear direction of the cell assembly, and configured to press the front surface of the cell assembly when swelling of the battery cell occurs.

Preferably, the second plate may be disposed between the second protrusion and the rear surface of the cell assembly in the front/rear direction of the cell assembly, and configured to press the rear surface of the cell assembly when swelling of the battery cell occurs.

Preferably, the battery pack may further comprise a connection part that connects the first plate and the second plate in the front/rear direction of the cell assembly.

Preferably, the connection part may include a first connection member that connects an upper end of the first plate and an upper end of the second plate in the front/rear direction of the cell assembly, and is disposed in plural numbers along a left/right direction of the cell assembly, and a second connection member that connects the lower end of the first plate and the lower end of the second plate in the front/rear direction of the cell assembly, and is disposed in plurality along the left/right direction of the cell assembly.

According to another embodiment of the present disclosure, there is provided an energy storage system comprising at least one battery pack as described above.

### [Advantageous Effects]

According to some embodiments of the present disclosure, the firefighting tank can be more stably fixed within the pack case through the end plate to quickly control a thermal event inside the pack case, and at the same time, effectively prevent a swelling phenomenon of the cell module.

Also, the battery pack according to some embodiments of the present disclosure does not require an additional structure for supporting the firefighting tank, apart from the structure for preventing swelling, thereby securing cost competitiveness while increasing the efficiency of the manufacturing process, and realizing a compact structure with higher energy efficiency.

In addition, several other advantageous effects can be further achieved according to various embodiments of the present disclosure. Such various effects of the present disclosure will be described in detail in respective embodiments, but as for effects that can be easily understood by those skilled in the art, the description thereof will be omitted.

### [BRIEF DESCRIPTION OF THE DRAWINGS]

The following drawings attached thereto illustrate preferred embodiments of the invention, and serve to further understand the technical idea of the invention together with the contents of the invention described above. The disclosure should not be construed as being limited only to the embodiments as illustrated in the drawings.
FIG. 1 is a diagram showing the overall shape of a battery pack according to an embodiment of the present disclosure;
FIG. 2 is a front view of the battery pack of FIG. 1;
FIG. 3 is a top view of the battery pack of FIG. 1;
FIG. 4 is a diagram showing a detailed structure of the battery pack of FIG. 1;
FIG. 5 is a diagram showing the overall shape of an end plate included in the battery pack of FIG. 1;
FIG. 6 is a front view of the end plate of FIG. 5;
FIG. 7 is a top view of the end plate of FIG. 5;
FIG. 8 is a side view of the end plate of FIG. 5;
FIG. 9 is a side view which projects and shows the inside of the battery pack of FIG. 1;
FIG. 10 is a top view which projects and shows the inside of the battery pack of FIG. 1;
FIG. 11 is a diagram showing an end plate according to another embodiment of the present disclosure;
FIG. 12 is a diagram showing an end plate according to another embodiment of the present disclosure; and
FIG. 13 is a side view which projects and shows the inside of the battery pack to which the end plate of FIG. 12 is applied.

### [DETAILED DESCRIPTION OF THE EMBODIMENTS]

Hereinafter, preferred embodiments of the present invention will be described in detail with reference to the accompanying drawings. Prior to the description, it should be understood that the terms or words used in the specification and the appended claims should not be construed as being limited to general and dictionary meanings, but interpreted based on the meanings and concepts corresponding to technical aspects of the invention on the basis of the principle that the inventor is allowed to define terms appropriately for the best explanation.

Therefore, the embodiments described herein and the configurations shown in the drawings are only most preferable embodiments of the present disclosure and do not represent the entire spirit of the present disclosure, so it should be appreciated that there may be various equivalents and modifications that can replace the embodiments and configurations at the time at which the present application is filed.

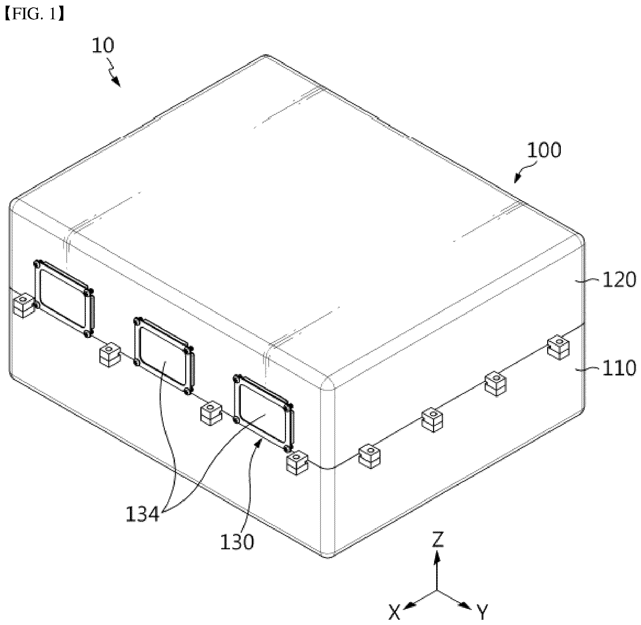

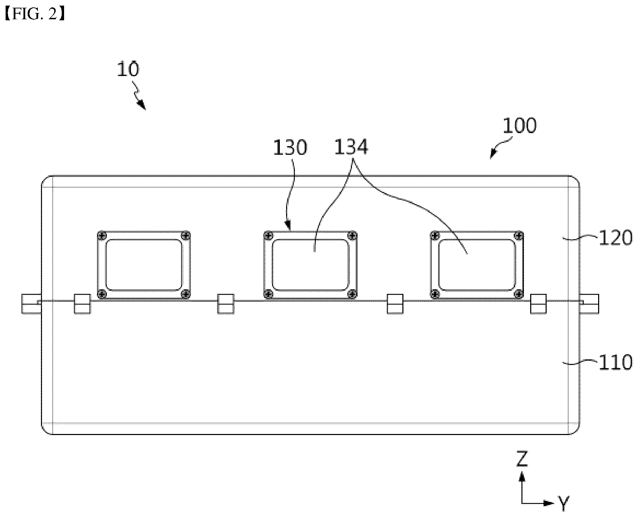

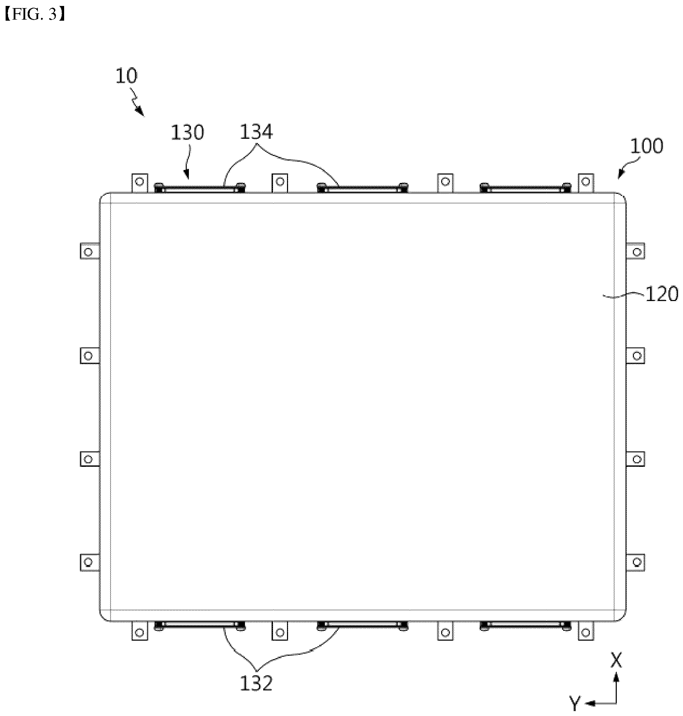

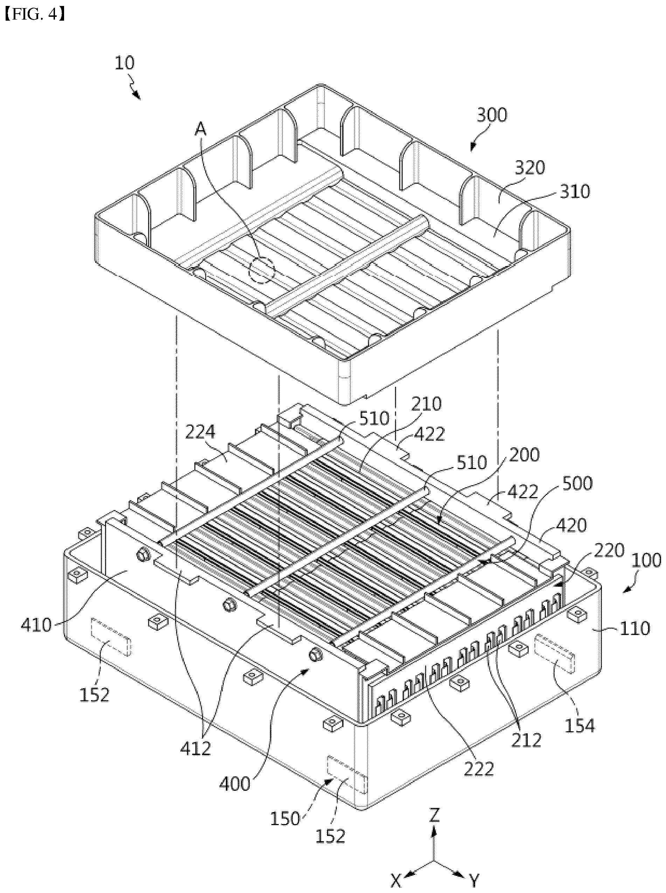

FIG. 1 is a diagram showing the overall shape of a battery pack 10 according to an embodiment of the present disclosure. FIG. 2 is a front view of the battery pack 10 of FIG. 1. FIG. 3 is a top view of the battery pack 10 of FIG. 1. FIG. 4 is a diagram showing a detailed structure of the battery pack 10 of FIG. 1. At this time, illustration of the second cover 120, which will be described later with reference to FIG. 4, is omitted.

In some embodiments of the present disclosure, the X-axis direction shown in the drawing may mean the front/rear direction, the Y-axis direction may mean the left/right direction perpendicular to the X-axis direction in the horizontal plane (XY plane), and the Z-axis direction may mean a vertical direction perpendicular to both the X-axis direction and the Y-axis direction.

Referring to FIGS. 1 to 4, the battery pack 10 according to an embodiment of the present disclosure may include a pack case 100, a cell module 200, a firefighting tank 300 and an end plate 400.

The pack case 100 may house the cell module 200 therein. For this purpose, the pack case 100 may be provided with a housing space for housing the cell module 200. Such a pack case 100 will be discussed more specifically in the related description below.

The cell module 200 is provided in the inside of the pack case 100 and may include a cell assembly 210.

The cell assembly 210 may include one or more battery cells. Here, each battery cell may mean a secondary battery. The battery cell may be provided as a pouch-type battery cell, a cylindrical battery cell, or a prismatic battery cell. As an example, the battery cell may be a pouch-type battery cell.

Such battery cells may be arranged to be stacked in one direction and electrically connected to each other. Each of the battery cells may include a pair of electrode leads 212. At this time, the pair of electrode leads 212 of the plurality of battery cells may be formed on both sides in the left/right direction of the cell assembly 210.

The firefighting tank 300 is disposed on the upper side of the cell assembly 210 and may hold a fire extinguishing agent therein. Such a firefighting tank 300 has an inner space, and can hold a fire extinguishing agent in such an inner space. As an example, the fire extinguishing agent may be a liquid such as water, salt water and antifreeze. In addition, the firefighting tank 300 may be housed inside the pack case 100.

The firefighting tank 300 is configured in a box shape with an opened upper part, and can provide a space in which the fire extinguishing agent can be housed.

According to some embodiments of the present disclosure, the fire extinguishing agent is discharged from the firefighting tank 300 disposed above the cell assembly 210, so that a thermal event of the cell assembly 210 can be more easily controlled. In particular, the fire extinguishing agent discharged from the firefighting tank 300 can easily move downward by gravity. Therefore, the heat or fire suppression of the cell assembly 210 can be made more easily by the fire extinguishing agent.

The end plate 400 may be disposed on at least one of the front side and the rear side of the cell assembly 210. The end plate 400 may be configured to support the firefighting tank 300.

The end plate 400 allows the firefighting tank 300 to be stably fixed inside the pack case 100. Thereby, the fire extinguishing agent is stably discharged from the firefighting tank 300 toward the cell assembly 210, so that the heat or fire of the cell assembly 210 can be suppressed more easily.

At this time, the end plate 400 may be disposed only on the front side or the rear side of the cell assembly 210. Alternatively, the end plate 400 may be disposed on the front side and the rear side of the cell assembly 210, respectively.

In the present embodiment, it will be described that the end plate 400 is illustratively provided as a pair.

The end plate 400 is disposed between the pack case 100 and the cell assembly 210 in the front/rear direction of the cell assembly 210, and may be configured to press at least one of the front surface and the rear surface when swelling of the battery cell occurs.

That is, the end plate 400 may be disposed on both sides at the front and rear of the cell assembly 210, and may be configured to press at least one of the front surface and the rear surface of the cell assembly 210 when swelling of the battery cell occurs.

By pressing the end plate 400 in this way, a swelling phenomenon that may occur in the cell module 200 inside the pack case 100 can be effectively suppressed.

Ultimately, through the end plates 400, it is possible to prevent swelling that may occur in the cell module 200, and at the same time, stably fix the firefighting tank 300 inside the pack case 100. That is, in the present embodiment, since the end plate 400 supports both the firefighting tank 300 and the cell module 200, no additional fastening parts or fastening structures are required to fix or support these members. Thereby, in the present embodiment, there can be provided a battery pack 10, which can increase the efficiency of the assembly process of the battery pack 10 through the end plate 400, can ensure cost competitiveness, and realize a compact structure with higher energy efficiency.

The firefighting tank 300 may be configured to discharge the fire extinguishing agent to the cell assembly 210 side between both sides of the bottom part when heat is applied from the cell assembly 210. Here, the end plate 400 may support both sides of the bottom part of the firefighting tank 300 in the vertical direction.

By supporting both sides of the bottom part of the firefighting tank 300 by the end plate 400, the firefighting tank 300 can be more stably supported even when the fire extinguishing agent is discharged from the firefighting tank 300, and the leakage of the fire extinguishing agent to the outside of the bottom part of the firefighting tank 300 can also be effectively prevented, so that the injection efficiency of the fire extinguishing agent into the cell assembly 100 can be increased.

Meanwhile, fixing parts 412 and 422 having a predetermined area and making surface contact with both sides of the bottom part of the firefighting tank 300 may be provided on the upper side of the end plate 400.

The firefighting tank 300 can be supported more stably by such fixing parts 412 and 422.

Further, the fixing parts 412 and 422 may be bent from an upper end of the end plate 400 and formed to extend to a predetermined length along an outside direction of the cell assembly. That is, the end plate 400 may have a substantially L-shaped structure.

According to such configuration of the present disclosure, the contact area between both sides of the bottom part of the firefighting tank 300 and the end plate 400 is increased, so that the firefighting tank 300 can be supported more stably.

Below, the end plate 400 will be described in more detail.

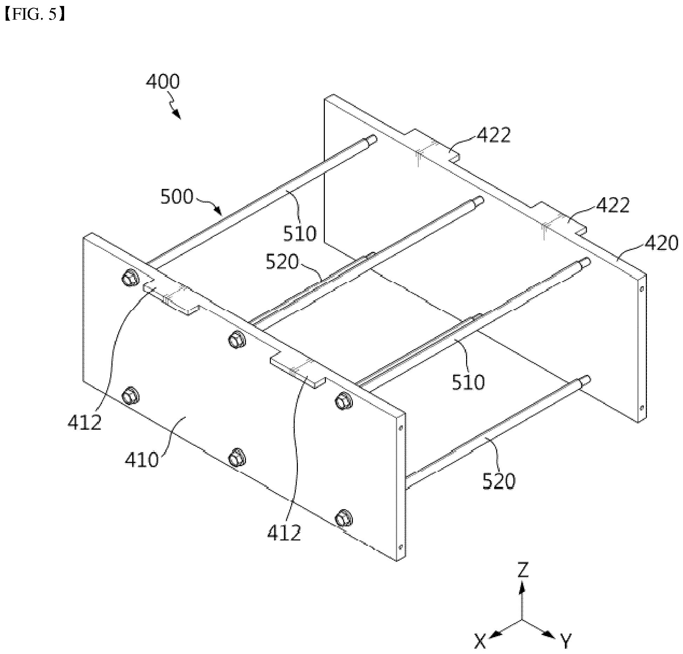

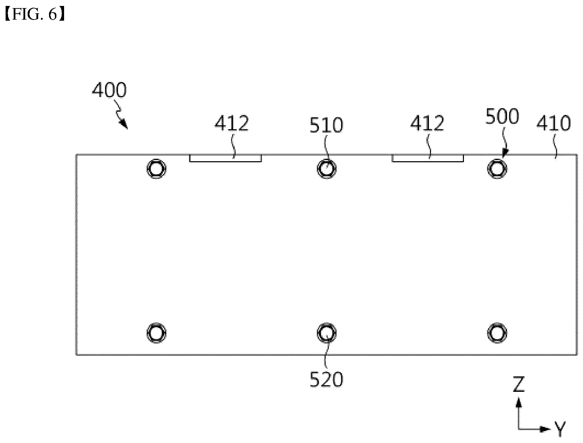

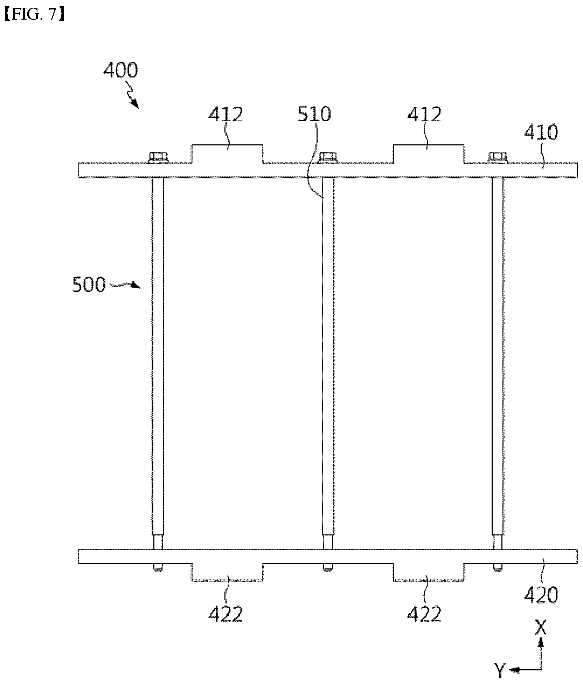

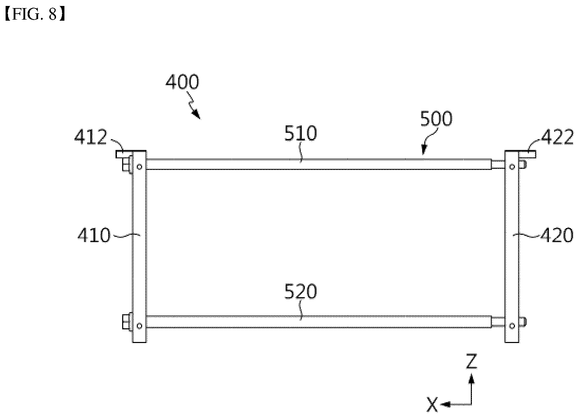

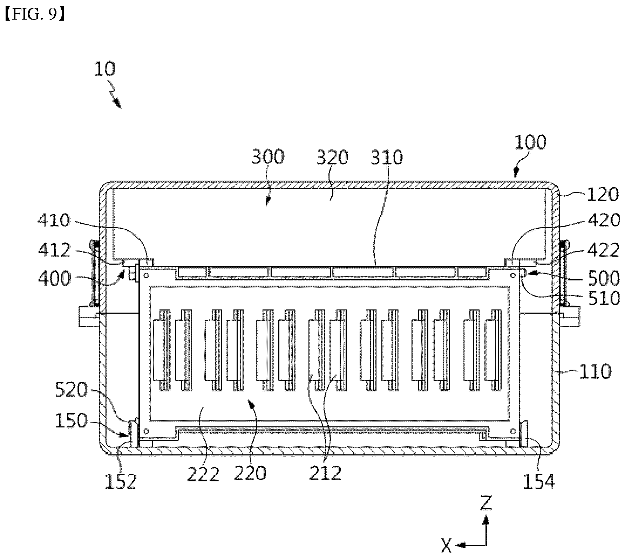

FIG. 5 is a diagram showing the overall shape of an end plate 400 included in the battery pack 10 of FIG. 1, FIG. 6 is a front view of the end plate 400 of FIG. 5. FIG. 7 is a top view of the end plate 400 of FIG. 5. FIG. 8 is a side view of the end plate 400 of FIG. 5. FIG. 9 is a side view which projects and shows the inside of the battery pack 10 of FIG. 1.

Referring to FIGS. 4 to 9, the end plate 400 may include a first plate 410 and a second plate 420.

The first plate 410 is disposed on the front surface of the cell assembly 210, and can support the front side of the firefighting tank 300 in the vertical direction.

Meanwhile, the aforementioned fixing parts 412 and 422 may include the first fixing part 412. Further, the first plate 410 may include the first fixing part 412.

The first fixing part 412 may be formed to extend from an upper end of the first plate 410 in the front/rear direction of the cell assembly 210. Further, the first fixing part 412 may be coupled to the front side of the firefighting tank 300 in a vertical direction. And, the first fixing part 412 may make surface contact with the front side of the firefighting tank 300. By the first fixing part 412, the contact area between the front side of the firefighting tank 300 and the first plate 410 is increased, so that the firefighting tank 300 can be stably supported.

At this time, the coupling between the first fixing part 412 and the firefighting tank 300 may be made by a separate fastening member (not shown). Alternatively, the coupling between the first fixing part 412 and the firefighting tank 300 may also be made by a separate adhesive member (not shown).

The second plate 420 is disposed on the rear surface of the cell assembly 210, and may support the rear side of the firefighting tank 300 in the vertical direction.

Meanwhile, the aforementioned fixing parts 412 and 422 may further include a second fixing part 422. And, the second plate 420 may include the second fixing part 422.

The second fixing part 422 may be formed to extend from an upper end of the second plate 420 in the front/rear direction of the cell assembly 210. Further, the second fixing part 422 may be coupled to the rear side of the firefighting tank 300 in a vertical direction. And, the second fixing part 422 may make surface contact with the rear side of the firefighting tank 300. Through the second fixing part 422, the contact area between the rear side of the firefighting tank 300 and the second plate 420 is increased, so that the firefighting tank 300 can be stably supported.

At this time, the coupling between the second fixing part 422 and the firefighting tank 300 may be made by a separate fastening member (not shown). Alternatively, the coupling between the second fixing part 422 and the firefighting tank 300 can be made by a separate adhesive member (not shown).

Due to the configuration of the aforementioned end plate 400, the firefighting tank 300 can be stably fixed within the pack case 100. Thereby, the fire extinguishing agent is stably discharged from the firefighting tank 300 toward the cell assembly 210, so that the heat or fire suppression of the cell assembly 210 can be made more easily.

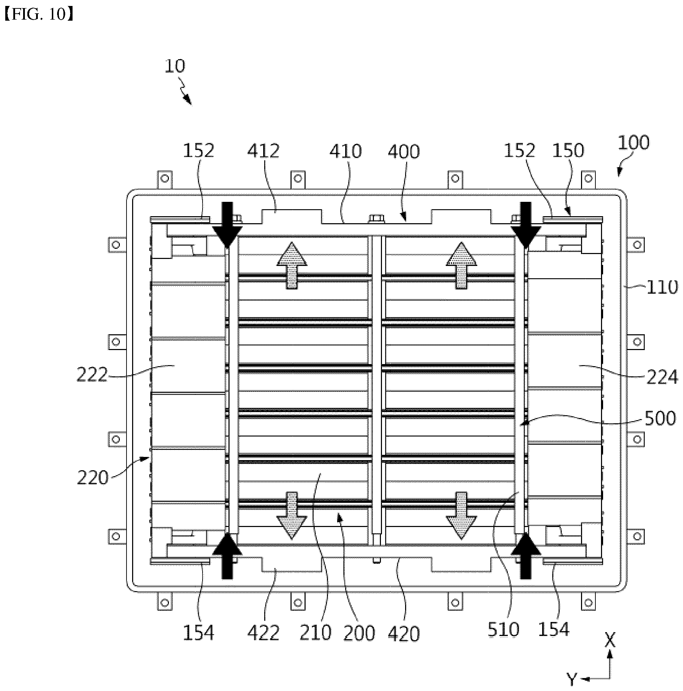

FIG. 10 is a top view which projects and shows the inside of the battery pack 10 of FIG. 1. At this time, illustration of the firefighting tank 300 described above with reference to FIG. 10 is omitted.

Referring to FIGS. 4 to 10 , the aforementioned pack case 100 may further include a guide protrusion 150.

The guide protrusion 150 is formed to protrude from the bottom part of the pack case 100 in a vertical direction, and is provided apart from the front surface and the rear surface of the cell assembly at a specified interval in the front/rear direction of the cell assembly 210. Here, the guide protrusion 150 may be provided integrally with the bottom part of the pack case 100, or may be mounted as a separate member.

Such a guide protrusion 150 may be disposed on the opposite side of the cell assembly 210 with the end plate 400 interposed therebetween.

Specifically, the guide protrusion 150 may include a first protrusion 152 and a second protrusion 154.

The first protrusion 152 may be formed apart from the front surface of the cell assembly 210 at a specified interval in the front/rear direction of the cell assembly 210.

At this time, the first plate 410 is disposed between the first protrusion 152 and the front surface of the cell assembly 210 in the front/rear direction of the cell assembly 210, and may be configured to press the front surface of the cell assembly 210 when swelling of the battery cell occurs.

Specifically, the first plate 410 may be configured to press the front surface of the cell assembly 210 when swelling of the battery cell occurs, in a state in which the cell assembly 210 is supported in the front/rear direction by the first protrusion 152. Accordingly, the first plate 410 can effectively suppress a swelling phenomenon of the cell module 200.

The second protrusion 154 may be formed apart from the rear surface of the cell assembly 210 at a specified interval in the front/rear direction of the cell assembly 210.

At this time, the second plate 420 is disposed between the second protrusion 154 and the rear surface of the cell assembly 210 in the front/rear direction of the cell assembly 210, and may be configured to press the rear surface of the cell assembly 210 when swelling of the battery cell occurs.

Specifically, the second plate 420 may be configured to press the rear surface of the cell assembly 210 when swelling of the battery cell occurs, in a state in which the cell assembly 210 is supported in the front/rear direction by the second protrusion 154. Accordingly, the second plate 420 can effectively suppress a swelling phenomenon of the cell module 200.

Similar to the configuration described above, the end plate 400 can more stably press the front surface and the rear surface of the cell assembly 210, in a state in which the cell assembly 210 is supported in the front/rear direction by the guide protrusion 150.

Accordingly, the swelling phenomenon that may occur in the cell module 200 can be more effectively suppressed. Further, since the end plate 400 is stably supported in the front/rear direction of the cell assembly 210 by the configuration of the guide protrusion 150 described above, the firefighting tank 300 can be more stably fixed within the pack case 100 by the end plate 400.

Accordingly, the fire extinguishing agent is stably discharged from the firefighting tank 300 toward the cell assembly 210, so that the heat or fire suppression of the cell assembly 210 can be made more easily.

Referring back to FIGS. 4 to 10, the battery pack 10 may further include a connection part 500.

The connection part 500 may connect the first plate 410 and the second plate 420 in the front/rear direction of the cell assembly 210. As an example, the connection part 500 may be a long bolt extending in the front/rear direction of the cell assembly 210. Accordingly, the first plate 410 and the second plate 420 may be interconnected.

Below, the connection part 500 will be described in more detail.

The connection part 500 may include a first connection member 510 and a second connection member 520.

The first connection member 510 may connect an upper end of the first plate 410 and an upper end of the second plate 420 in the front/rear direction of the cell assembly 210. At this time, the first connection members 510 may be disposed in plural numbers along the left/right direction of the cell assembly 210 .

The second connection member 520 may connect the lower end of the first plate 410 and the lower end of the second plate 420 in the front/rear direction of the cell assembly 210. At this time, the second connection members 520 may be disposed in plural numbers along the left/right direction of the cell assembly 210.

In this manner, the connection part 500 can connect the upper and lower ends of the first plate 410 and the second plate 420 at the same time. Thus, the first plate 410 and the second plate 420 can be stably connected to each other in the front/rear direction of the cell assembly 210.

Thereby, the front and back surfaces of the cell assembly 210 can be pressed more stably and effectively by the end plates 400. Further, since the first plate 410 and the second plate 420 of the end plate 400 are stably connected to each other by the configuration of the connection part 500 described above, the firefighting tank 300 can be more stably fixed within the pack case 100 by the end plate 400.

Thereby, the fire extinguishing agent is stably discharged from the firefighting tank 300 toward the cell assembly 210, so that the heat or fire suppression of the cell assembly 210 can be made more easily.

Meanwhile, the cell assembly 210 may be disposed between the first connection member 510 and the second connection member 520 in the vertical direction. Therefore, interference between the cell assembly 210 and the connector part 500 can be prevented.

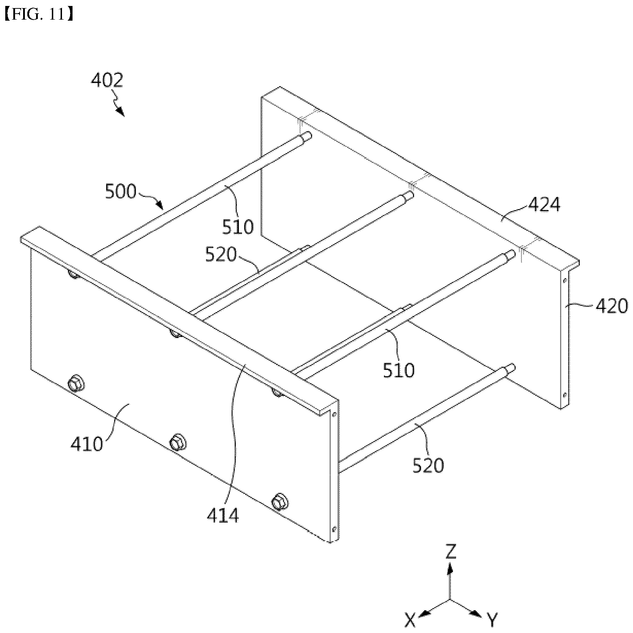

FIG. 11 is a diagram showing an end plate 402 according to another embodiment of the present disclosure.

Since the end plate 402 according to the present embodiment is similar to the end plate 400 of the previous embodiment, duplicate description of the components substantially identical or similar to those of the previous embodiment will be omitted, and the following discussion focuses on the differences from the previous embodiment.

Referring to FIG. 11, the end plate 402 may include a first plate 410 and a second plate 420.

The first plate 410 may include a first fixing part 414, and the second plate 420 may include a second fixing part 424.

The first fixing part 414 may be formed to extend from the upper end of the first plate 410 in the front/rear direction of the cell assembly 210. The first fixing part 414 may be configured to extend long in the left/right direction of the cell assembly 210 from the upper end of the first plate 410.

Further, the second fixing part 424 may be formed to extend from an upper end of the second plate 420 in the front/rear direction of the cell assembly 210. The second fixing part 424 may be configured to extend long in the left/right direction of the cell assembly 210 from the upper end of the second plate 420.

In such a case, the contact area between the first plate 410, the second plate 420 and the firefighting tank 300 can be further increased. Thereby, the firefighting tank 300 can be more stably fixed to the upper side of the end plate 402.

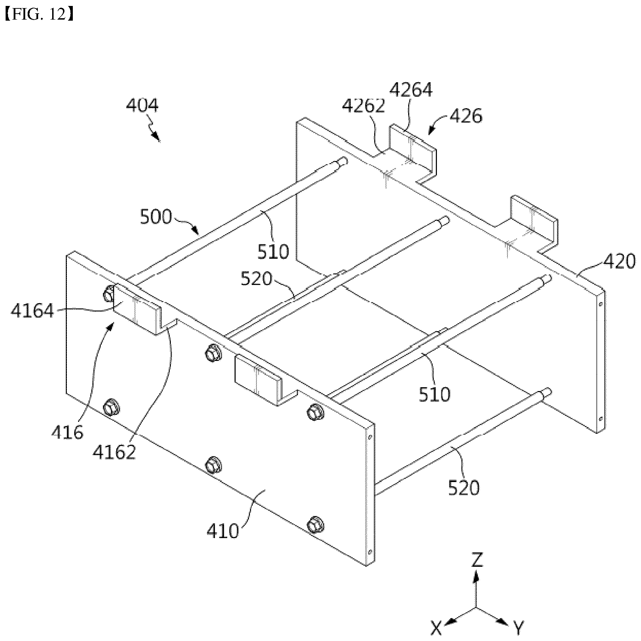

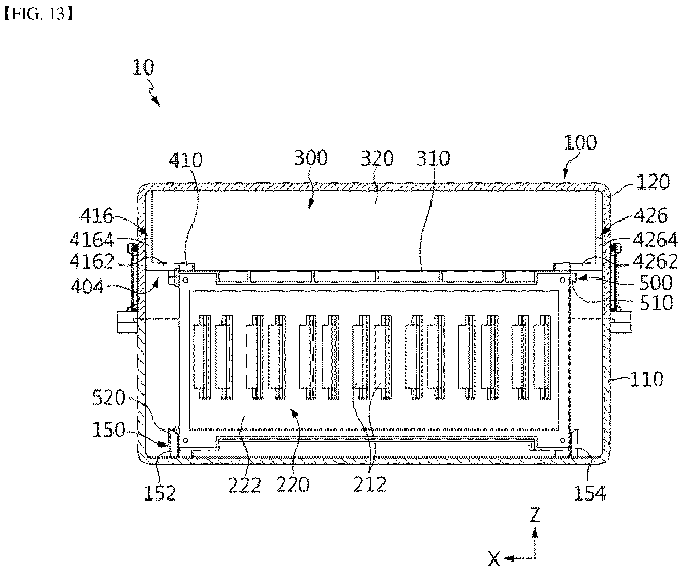

FIG. 12 is a diagram showing an end plate 404 according to another embodiment of the present disclosure. FIG. 13 is a side view which projects and shows the inside of the battery pack 10 to which the end plate 404 of FIG. 12 is applied.

Since the end plate 404 according to the present embodiment is similar to the end plate 400 of the previous embodiment, duplicate description of the components substantially identical or similar to those of the previous embodiment will be omitted, and the following discussion focuses on the differences from the previous embodiment.

Referring to FIGS. 12 and 13, the end plate 404 may include a first plate 410 and a second plate 420.

The first plate 410 may include a first fixing part 416, and the second plate 420 may include a second fixing part 426.

The first fixing part 416 may include a first horizontal plate 4162 and a first vertical plate 4164.

The first horizontal plate 4162 may be formed to extend from an upper end of the first plate 410 in the front/rear direction of the cell assembly 210. The first horizontal plate 4162 may be coupled to the front side of the firefighting tank 300 in the vertical direction.

The first vertical plate 4164 may be formed to extend in the vertical direction from an end of the first horizontal plate 4162. The first vertical plate 4164 may support the front side surface of the firefighting tank 300 in the front/rear direction of the cell assembly 210.

Further, the second fixing part 426 may include a second horizontal plate 4262 and a second vertical plate 4264.

The second horizontal plate 4262 may be formed to extend from an upper end of the second plate 420 in the front/rear direction of the cell assembly 210. The second horizontal plate 4262 may be coupled to the rear side of the firefighting tank 300 in the vertical direction.

The second vertical plate 4264 may be formed to extend in the vertical direction from an end of the second horizontal plate 4262. The second vertical plate 4264 may support the rear side surface of the firefighting tank 300 in the front/rear direction of the cell assembly 210.

According to this embodiment of the present disclosure, the end plate 404 can support the firefighting tank 300 not only in the vertical direction but also in the front/rear direction, so that the firefighting tank 300 can be more stably fixed within the pack case 100.

The aforementioned pack case 100 may include a first cover 110, a second cover 120 and a gas flow passage 130.

Referring again to FIGS. 1 to 3, 9 and 10, the first cover 110 may be provided with a housing space for housing the cell module 200. Such a first cover 110 may be coupled with a second cover 120, which will be described later, to thereby house the cell module 200 therein. Further, the bottom surface of the first cover 110 may constitute the bottom part of the pack case 100.

In one embodiment, the aforementioned guide protrusion 150 is provided on the first cover 110, and may be provided on the bottom surface of the first cover 110 constituting the bottom part of the pack case 100.

The second cover 120 may be coupled to the first cover 110 in a vertical direction. At this time, the second cover 120 may be disposed on the upper part of the first cover 110.

In one embodiment, the upper part of the firefighting tank 300 may be covered by the second cover 120 of the pack case 100, as shown in FIG. 9.

Further, when the first cover 110 and the second cover 120 are coupled in the vertical direction, the front surface, the rear surface, the left side surface and the right side surface of the pack case 100 may be formed as shown in FIG. 1. As an example, the coupling between the first cover 110 and the second cover 120 can be made by a plurality of fastening members (not shown).

Meanwhile, in the embodiment of the present disclosure, the pack case 100 may not be configured separately into the first cover 110 and the second cover 120, but may be configured integrally.

The gas flow passage 130 is for guiding air inflow into the pack case 100 and gas discharge inside the pack case 100, and may be provided in the second cover 120.

The gas flow passage 130 may include an air inflow part 132 and a gas discharge part 134.

The air inflow part 132 may be formed on a rear side of the second cover 120. At this time, the air inflow part 132 may allow external air to flow into the pack case 100.

The gas discharge part 134 may be formed on the front side of the second cover 120. At this time, the gas discharge part 134 may allow the gas inside the pack case 100 to be discharged to the outside.

Meanwhile, the air inflow part 132 and the gas discharge part 134 may be formed with a mesh structure. At this time, through the air inflow part 132 having the mesh structure, foreign matter of a predetermined size is prevented from entering inside the pack case 100, and the air can smoothly flow into the inside of the pack case 100. Similarly, through the gas discharge part 134 having the mesh structure, the foreign matter is prevented from entering inside the pack case 100, and venting gas generated in the inside of the pack case 100 can be discharged to the outside of the pack case 100.

Further, the air inflow part 132 allows air to flow smoothly into the pack case 100, thereby preventing negative pressure from occurring inside the firefighting tank 300. Further, the air inflow part 132 can prevent a decrease in the injection speed or a decrease in the injection amount of the fire extinguishing agent into the cell module 200, which is caused by the generation of negative pressure inside the firefighting tank 300.

The cell module 200 may further include a busbar frame 220.

The busbar frame 220 is for sensing the voltage of the cell assembly 210, and may be provided as a pair to support one side surface and the other side surface of the cell assembly 210 in the left/right direction.

As an example, the busbar frame 220 may include a first busbar frame 222 and a second busbar frame 224.

The first busbar frame 222 may support one side surface (e.g., left side surface) in the left/right direction of the cell assembly 210. In addition, a busbar (not shown) provided in the first busbar frame 222 may be connected to an electrode lead 212 formed on one side surface in a left/right direction of the cell assembly 210.

The second busbar frame 224 may support the other side surface (e.g., right side surface) in the left/right direction of the cell assembly 210. In addition, the busbar (not shown) provided in the second busbar frame 224 may be connected to the electrode lead 212 formed on the other side surface in the left/right direction of the cell assembly 210.

The firefighting tank 300 may be configured such that at least a portion thereof is melted by heat applied from the cell assembly 210 to discharge the fire extinguishing agent. For example, in FIG. 4, the portion indicated by A of the firefighting tank 300 may be melted by heat. Then, through the portion melted in this way, the fire extinguishing agent may be discharged between both sides of the bottom part of the firefighting tank 300 towards the cell assembly 210. For this purpose, at least a portion of the firefighting tank 300 may be made of a material that can be melted by heat applied from the cell assembly 210. As an example, the firefighting tank 300 may be entirely made of a plastic material.

Meanwhile, in the battery pack 10 of the present disclosure, the aforementioned pack case 100 may be configured to be stacked in the vertical direction. That is, the battery pack 10 of the present disclosure may be configured by stacking different pack cases 100 in the vertical direction. In this case, since each pack case 100 has a cell module 200 therein, it is possible to realize battery packs 10 with various capacities depending on the number of stacked pack cases 100. And, as described above, since each pack case 100 has a firefighting tank 300 therein, and thus, when a thermal event occurs in the cell assembly 210 inside some pack case 100, this thermal event can be prevented from being transferred to the cell assembly 210 inside the other pack case 100.

The firefighting tank 300 may illustratively include the base plate 310 and the side wall 320. At this time, the base plate 310 may constitute the bottom part of the firefighting tank 300.

Here, the side wall 320 may be configured to protrude upward from the corner of the base plate 310. Further, the firefighting tank 300 has a bottom and a side part formed by the base plate 310 and the side wall 320, thereby capable of forming a space in which the fire extinguishing agent is housed. At this time, the upper part of the firefighting tank 300 may be sealed by the pack case 100. Alternatively, the firefighting tank 300 may separately include an upper cover configured to seal the fire extinguishing agent-housing space thereon.

The base plate 310 of such a firefighting tank 300 may be formed to have different thicknesses in the vertical direction for each portion. In particular, the base plate 310 may be configured to have a thin thickness at a specific portion, as shown by a section A in FIG. 4. As an example, the base plate 310 may be configured in the form of a plastic injection molding having a thickness of 1 mm as a whole, and a portion indicated by A may have a thickness of 0.5 mm.

In this manner, a thinly formed portion of the base plate 310 may function as a fragile part. That is, when a thermal event such as thermal runaway occurs in the cell assembly 210 and heat is applied to the fragile part, the fragile part may first be broken. And, when the fragile part is broken, the fire extinguishing agent housed in the firefighting tank 300 may be discharged toward the cell assembly 210 through the broken fragile part. Thereby, a configuration for injecting the fire extinguishing agent into the cell assembly 210 can be realized with a simpler structure, and the fire extinguishing agent can be injected into the cell assembly 210 more quickly.

Referring to FIGS. 4 to 9, at least a portion of the base plate 310 constituting the bottom part of the firefighting tank 300 may protrude downward from the base plate 310. By way of example, a portion of the base plate 310 including the fragile part indicated by A in FIG. 4 may protrude downward from the base plate 310. In this manner, at least a portion of the base plate 310 may be disposed between the first plate 410 and the second plate 420 in the front/rear direction of the cell assembly 210.

According to such a configuration of the invention, the firefighting tank 300 can be prevented from moving forward and backward by the end plate 400. Further, according to the configuration of the present disclosure, a portion where the fire extinguishing agent is discharged to the cell assembly 210 from the firefighting tank 300 (a portion where a fragile part is formed) may be disposed between the first plate 410 and the second plate 420. Thereby, the fire extinguishing agent can be completely discharged toward the cell assembly 210 from the firefighting tank 300, so that heat or fire suppression of the cell assembly 210 can be more easily made.

As discussed above, according to some embodiments of the present disclosure, the firefighting tank 300 is more stably fixed in the pack case 100 through the end plates 400, 402, and 404, so that a thermal event inside the pack case 100 can be quickly controlled, and at the same time, swelling of the cell module 200 can be effectively prevented.

In addition, since the battery pack 10 according to the embodiment of the present disclosure does not require an additional structure for supporting the firefighting tank 300, apart from a structure for preventing swelling, it is possible to secure cost competitiveness while increasing the efficiency of the manufacturing process, and realize a compact structure with higher energy efficiency.

Meanwhile, the battery pack 10 according to the present disclosure may further include, in addition to the pack case 100 and the cell module 200, various devices for controlling charging and discharging the cell module 200, such as a BMS (Battery Management System), a current sensor, a fuse, and the like.

As an example, the battery pack 10 according to the present disclosure can be used as a home battery pack. Further, at least one battery pack 10 according to the present disclosure can be provided as an energy source to configure an energy storage system (ESS).

While the invention has been particularly shown and described with reference to exemplary embodiments thereof and the accompanying drawings, the present disclosure is not limited thereto, and it will be understood by those skilled in the art that various changes in form and details may be made therein, without departing from the spirit and scope of the invention as defined by the appended claims and their equivalents.

Meanwhile, the terms representing directions such as the front side, the rear side, the left side, the right side, the upper side, and the lower side have been used in embodiments of the present disclosure, but it will be obvious to those skilled in the art that the terms used are provided simply for convenience of description and may become different according to the position of an object, the position of an observer, or the like.

### [Description of Reference Numerals]

10: battery pack
100: pack case
150: guide protrusion
152: first protrusion
154: second protrusion
200: cell module
210: cell assembly
300: firefighting tank
400, 402, 404: end plate
410: first plate
420: second plate
500: connection part
510: first connection member
520: second connection member

## Claims

1. A battery pack comprising:
a pack case;
a cell module provided inside the pack case and including a cell assembly having a plurality of battery cells;
a firefighting tank disposed on an upper side of the cell assembly and holding a fire extinguishing agent in an internal space; and
an end plate disposed on at least one of the front and rear sides of the cell assembly and configured to support the firefighting tank.

2. The battery pack according to claim 1, wherein:
the end plates are disposed on both sides at the front and rear of the cell assembly, and are configured to press at least one of front and rear surfaces of the cell assembly when swelling of the battery cell occurs.

3. The battery pack according to claim 2, wherein:
the firefighting tank is configured to discharge the fire extinguishing agent between both sides of the bottom part toward the cell assembly when heat is applied from the cell assembly, and
the end plates support both sides of the bottom part of the firefighting tank in a vertical direction.

4. The battery pack according to claim 3, wherein:
a fixing part having a predetermined area and making surface contact with both sides of the bottom part of the firefighting tank is provided on the upper side of the end plate.

5. The battery pack according to claim 4, wherein:
the fixing part is bent from an upper end of the end plate and formed to extend to a predetermined length along an outside direction of the cell assembly.

6. The battery pack according to claim 5, wherein:
the end plate comprises,
a first plate disposed on the front surface of the cell assembly and supporting the front side of the firefighting tank in a vertical direction; and
a second plate disposed on the rear surface of the cell assembly and supporting the rear side of the firefighting tank in the vertical direction.

7. The battery pack according to claim 6, wherein:
the fixing part comprises a first fixing part that is formed to extend from the upper end of the first plate in the front/rear direction of the cell assembly, and is coupled to the front side of the firefighting tank in the vertical direction.

8. The battery pack according to claim 7, wherein:
the first fixing part makes surface contact with the front side of the firefighting tank.

9. The battery pack according to claim 6, wherein:
the fixing part further comprises a second fixing part that is formed to extend from the upper end of the second plate in the front/rear direction of the cell assembly, and is coupled to the rear side of the firefighting tank in the vertical direction.

10. The battery pack according to claim 9, wherein:
the second fixing part makes surface contact with the rear side of the firefighting tank.

11. The battery pack according to claim 6, wherein:
the pack case comprises a guide protrusion that is formed to protrude from the bottom part of the pack case in a vertical direction, and is provided apart from the front surface and the rear surface of the cell assembly at a specified interval in the front/rear direction of the cell assembly, and
the guide protrusion is disposed on the opposite side of the cell assembly with the end plate interposed therebetween.

12. The battery pack according to claim 11, wherein:
the guide protrusion comprises,
a first protrusion formed apart from the front surface of the cell assembly at a specified interval in the front/rear direction of the cell assembly; and
a second protrusion formed apart from the rear surface of the cell assembly at a specified interval in the front/rear direction of the cell assembly.

13. The battery pack according to claim 12, wherein:
the first plate is disposed between the first protrusion and the front surface of the cell assembly in the front/rear direction of the cell assembly, and configured to press the front surface of the cell assembly when swelling of the battery cell occurs, and
the second plate is disposed between the second protrusion and the rear surface of the cell assembly in the front/rear direction of the cell assembly, and configured to press the rear surface of the cell assembly when swelling of the battery cell occurs.

14. The battery pack according to claim 13,
further comprising a connection part that connects the first plate and the second plate in the front/rear direction of the cell assembly.

15. The battery pack according to claim 14, wherein:
the connection part comprises,
a first connection member that connects an upper end of the first plate and an upper end of the second plate in the front/rear direction of the cell assembly, and is disposed in plural numbers along a left/right direction of the cell assembly, and
a second connection member that connects the lower end of the first plate and the lower end of the second plate in the front/rear direction of the cell assembly, and is disposed in plurality along the left/right direction of the cell assembly.

16. An energy storage system comprising at least one battery pack according to any one of claims 1 to 15.
